# EUROPÄISCHE PATENTSCHRIFT

(11) **EP 0 652 422 B1**
(45) Veröffentlichungstag und Bekanntmachung des Hinweises auf die Patenterteilung: **07.10.1998**
(21) Anmeldenummer: 94117142.3
(22) Anmeldetag: 29.10.1994
(51) Int. Cl.: G01J 1/04, G08B 13/193

(54) **Vorrichtung zum Empfang von Lichtstrahlen**
Device for receiving light rays
Dispositif pour recevoir des rayons lumineux

(30) Priorität: 06.11.1993 DE 4337953
(43) Veröffentlichungstag der Anmeldung: 10.05.1995
(73) Patentinhaber: ABB PATENT GmbH, 68309 Mannheim (DE)
(72) Erfinder: Blomberg, Lothar, D-58809 Neuenrade (DE); Hofmann, Günter, Prof. Dr., D-01169 Dresden (DE); Lang, Jens Olaf, D-01462 Cossebaude (DE); Norkus, Volkmar, Dr., D-01169 Dresden (DE); Rosch, Rainer, Dr., D-58513 Lüdenscheid (DE); Zimmerhackl, Manfred, Dr., D-01219 Dresden (DE)
(74) Vertreter: Rupprecht, Klaus, Dipl.-Ing.

(56) Entgegenhaltungen:
- EP-A- 0 113 468
- EP-A- 0 326 942
- EP-A- 0 421 119
- EP-A- 0 435 120
- EP-A- 0 623 905
- DE-A- 4 100 536
- DE-U- 8 910 920
- Rainer Rosch: Passiv-Infrarotbewegungsmelder, automatisches Schalten und Überwachen, Verlag Moderne Industrie 1996

## Beschreibung

Die Erfindung betrifft eine Vorrichtung nach dem Oberbegriff des Anspruchs 1.

Vorrichtungen dieser Art werden als PIR-Bewegungsmelder zum automatischen Einschalten von Raumbeleuchtungen und in Verbindung mit Alarm- und Überwachungsanlagen bei der Raumüberwachung eingesetzt. Besonders bei Überwachungsaufgaben ist die Größe des Erfassungswinkels der Vorrichtung von entscheidender Bedeutung, da ein zu kleiner Erfassungswinkel Schlupflöcher für ein unbemerktes Eindringen zuläßt. Um den Raum vor einer Hauswand zu sichern, sollte der Erfassungswinkel 180° betragen, während im Bereich einer Hausecke an der zwei Hauswände aufeinander treffen, der Erfassungswinkel 270° sein müßte. Zumindest im zweiten Fall muß man bisher mit zwei PIR-Bewegungsmeldern arbeiten, da deren Erfassungswinkel üblicherweise nicnt über 180° hinausgeht.

Die zum Aufbau von PIR-Bewegungsmeldern zu Verfügung stehenden Lichtsensoren besitzen ohne Hilfsmittel einen achsensymmetrischen Erfassungswinkel von etwa 90°. Außerhalb dieses nutzbaren Bereiches sinkt die Empfindlichkeit um 3 dB und ist damit zu gering für eine sichere Auswertung. Zur optischen Verstärkung wird dem Lichtsensor eine Linse im Abstand ihrer Brennweite vorgesetzt, wodurch sich der Erfassungswinkel auf wenige Winkelgrade verringert. Erst durch eine entsprechend große Zahl nebeneinander angeordneter Sammellinsen mit eigenen Zentrumsachsen entsteht eine n-fache, sich fächerartig spreizende Vervielfältigung der Projektion. Hierdurch wird der Erfassungswinkel des Lichtsensors auf die ganze optische Vorrichtung übertragen. Nach diesem Grundprinzip arbeiten die meisten PIR-Bewegungsmelder.

Um nun ausgehend von den zur Verfügung stehenden 90° des Lichtsensors den Erfassungswinkel zu vergrößern, sind vielfältige Anstrengungen unternommen worden. So beschreibt die EP 0 113 468 B1 eine Vorrichtung, bei der eine Vergrößerung des Erfassungswinkels mit Hilfe von geneigten Spiegeln erreicht wird. Während im mittleren Bereich, symmetrisch zu einer die Zentrumsachse des Lichtsensors bildenden Flächennormalen N, die Lichtstrahlen unreflektiert direkt auf den Lichtsensor auftreffen, werden aus den beiden Seitenbereichen kommende Lichtstrahlen über die Spiegel so auf den Lichtsensor umgelenkt, daß sie entsprechend steiler mit einem relativ kleinen Winkel zur Fächennormalen B einfallen. Mit dieser Vorrichtung ist es möglich einen Erfassungswinkel von ca 180° zu realisieren.

In der EP-A-0 421 119 ist ein Passiv-Infrarot-Bewegungsmelder beschrieben, der einen Infrarotsensor enthält, die in üblicher Weise aus zwei unterschiedlich gepolten Elementen aufgebaut ist. Auf den Sensor treffen frontal einfallende Infrarotstrahlen sowie lateral einfallende, an Spiegeln umgelenkte Infrarotstrahlen. Um in einer solchen Anordnung eine erhöhte Erfassungsempfindlichkeit zu erreichen, sind Dämpfungsmittel in Form einer Kunststoff-Folie angeordnet.

Die EP-A- 0 623 905 beschreibt einen Bewegungsmelder mit zwei Sensoren, wobei jeweils ein Sensor die Strahlung aus einem Sektor eines Linsenschirms empfängt und jedem Sensor mindestens ein Strahlenteilerelement zugeordnet ist. Dabei fällt ein erster Teil der Strahlung durch den Teiler auf den Sensor und ein zweiter Teil nach Reflexion am Teiler auf den Sensor. Sowohl beim Transmissions- wie auch beim Reflexionsvorgang am Teiler tritt eine Abschwächung auf.

Aus der EP 0 326 942 A2, von der die Erfindung ausgeht, ist eine Vorrichtung bekannt, die mit zwei Lichtsensoren aufgebaut ist. Diese sind in einem solchen Winkel versetzt zueinander positioniert, daß sich ihre beiden Erfassungswinkel zu einem Gesamterfassungswinkel von etwa 180° addieren.

Weiterhin sind aus der EP 0219 954 A1 und der EP 0435 120 A2 noch Vorrichtungen bekannt, die mit einem zusätzlichen Spiegel ausgerüstet sind, der von unten kommende Lichtstrahlen auf den Lichtsensor reflektiert.

Aufgabe der Erfindung ist es, eine Vorrichtung nach dem Oberbegriff des Anspruchs 1 zu schaffen, die konstruktiv mit einfachen Mitteln realisierbar ist und mit der ein deutlich über 180° hinausreichender Erfassungswinkel erzielt werden kann.

Diese Aufgabe wird durch die im Anspruch 1 gekennzeichneten Merkmale gelöst. Zweckmäßige Ausgestaltungen und Weiterbildungen des Erfindungsgegenstandes sind in den abhängigen Ansprüchen genannt.

Während die bekannten Vorrichtungen, die entweder mit zwei Lichtsensoren oder einem Lichtsensor und Spiegeln arbeiten, im Bereich von 180° bleiben, gelingt es mit der erfindungsgemäßen Vorrichtung auf überraschend einfache Weise durch Kombination von bestimmten Merkmalen dieser Vorrichtungen, Erfassungswinkel bis zu 270° und ggf. auch darüber hinaus zu realisieren und dadurch bei einer zweiseitigen Eckenüberwachung mit nur einem PIR-Bewegungsmelder auszukommen, also ein Gerät einzusparen. Um einen Erfassungswinkel von 270° zu erreichen, müssen zu den beiden Sensor-Erfassungswinkeln von je ca 90° noch zwei Horizontalreflektor-Erfassungswinkel von ca 45° hinzukommen. Dies kann dadurch geschehen, daß die beiden Horizontalreflektoren nur einem Lichtsensor zugeordnet sind, oder jeder der beiden Lichtsensoren durch einen Horizontalreflektor ergänzt ist.

Durch die besonders vorteilhafte Anordnung wird erreicht, daß die Vorrichtung symmetrisch zu einer vertikalen Raumteilerebene aufgebaut ist und sowohl einem linken Lichtsensor ein linker Horizontalreflektor, als auch einem rechten Lichtsensor ein rechter Horizontalreflektor zugeordnet ist. Mit dieser Anordnung wird beidseitig einer vertikalen Raumteilerebene ein Erfassungswinkel von je 135°, also insgesamt 270°, erreicht.

Eine besonders hohe Empfindlichkeit des PIR-Bewegungsmelders wird dadurch erzielt, daß alle reflektierten Horizontalstrahlen nur eine Einfachreflektion erfahren, und daß sich der Einfallwinkel, mit dem der reflektierte Lichtstrahl auf dem jeweiligen Lichtsensor auftrifft, in Bezug zu einer Sensorzentralachse verkleinert.

Prinzipiell wäre es möglich die beiden Lichtsensoren in einem Winkel von 180° zueinander zu versetzen, also beide sich quasi rückseitig gegenüberzustellen. Die Erfassungswinkel der beiden Horizontalreflektoren würden in diesem Fall im Bereich der vertikalen Raumteilerebene aufeinander treffen. Da jedoch im allgemeinen gerade in diesem Bereich die größte Empfindlichkeit gewünscht wird, ist es günstiger den Aufbau so zu wählen, daß mit Hilfe der Horizontalreflektoren sich an den linken Sensor-Erfassungswinkel ein linker Horizontalreflektor-Erfassungswinkel und an den rechten Sensor-Erfassungswinkel ein rechter Horizontalreflektor-Erfassungswinkel anschließt und der horizontale Gesamterfassungswinkel somit wiederum eine Größe von (a1+a2+b1+b2)=270° erreicht.

Um auch solche horizontal einfallenden Lichtstrahlen erfassen zu können, die eine vertikale Komponente haben, ist es von Vorteil, wenn die Linsensegmente so ausgebildet sind, daß für die horizontalen Lichtstrahlen mehrere Bündelungshauptachsen entstehen und die Reflektion über bündelspezifische Reflektorsegmente der Horizontalreflektoren erfolgt. Zwechmäßigerweise sind hierbei die einzelnen Reflektorsegmente plan oder näherungsweise plan.

Ein konstruktiv einfacher Aufbau wird dadurch erreicht, daß die Horizontalreflektoren an einem Halter befestigt sind, der gleichzeitig auch als Positionierer für die beiden Lichtsensoren dient.

Störungen und technische Fehler des Gerätes sind leichter erkennbar, wenn die Verarbeitung der elektrischen Ausgangssignale der beiden Lichtsensoren getrennt erfolgt.

Damit bei der 270°-Ausführung seitliche Ausbauchungen des durch die Linsensegmente geformten Bogens vermieden werden, ist dafür gesorgt, daß dieser zu seinen beiden Enden hin geradlinig ausläuft und die im Bereich der Horizontalreflektor-Erfassungswinkel liegenden Linsensegmente, die den gerade auslaufenden Teil bilden, mit ihrer Zentrumsachse auf den jeweils zugehörigen Lichtsensor entsprechend ausgerichtet sind.

Eine ganz wesentliche Verbesserung der Eigenschaften des PIR-Bewegungsmelders läßt sich dadurch erreichen, daß auf der Unterseite des Gehäuses ein weiteres Fenster vorgesehen ist, in dem vorzugsweise zweite Linsensegmente angeordnet sind, und daß dem linken Lichtsensor ein linker Vertikalreflektor und dem rechten Lichtsensor ein rechter Vertikalreflektor derart zugeordnet ist, daß von unten innerhalb eines ersten Vertikalreflektor-Erfassungswinkels und innerhalb eines zweiten Vertikalreflektor-Erfassungswinkels einfallende Lichtstrahlen auf die beiden Lichtsensoren reflektiert werden. Hierdurch wird nicht nur der weit und mittel entfernte Bereich um den PIR-Bewegungsmelder herum von diesem erfaßt, sondern auch der Nahbereich, so daß auch ein Unterkriechschutz erzielt wird.

Analog zu dem Aufbau des die Horizontalstrahlung erfassenden Teils des PIR-Bewegungsmelders ist es auch bei dem die Vertikal strahlung erfassenden Teil zweckmäßig, diesen entsprechend symmetrisch zu der vertikalen Raumteilerebene aufzubauen, wobei auch hier die auf die beiden Vertikalreflektoren treffenden Lichtstrahlen nach ihrer Reflektion in dem Halbraum bleiben, aus dem sie kommen.

Ausführungsbeispiele der Erfindung sind in den Zeichnungen dargestellt und werden im folgenden näher beschrieben.

Es zeigen:
- Fig. 1: den optischen Teil eines PIR-Bewegungsmelders in Draufsicht von oben mit dem Verlauf direkt einfallender und reflektierter horizontaler Lichtstrahlen,
- Fig. 2: die Darstellung nach Fig.1 in Seitenansicht, mit dem Verlauf reflektierter vertikaler Lichtstrahlen
- Fig. 3: die Darstellung nach Fig.1 mit den Erfassungswinkeln der einzelnen optischen Elemente,
- Fig. 4: die Darstellung nach Fig.2 mit den Erfassungswinkeln der Vertikalreflektoren.

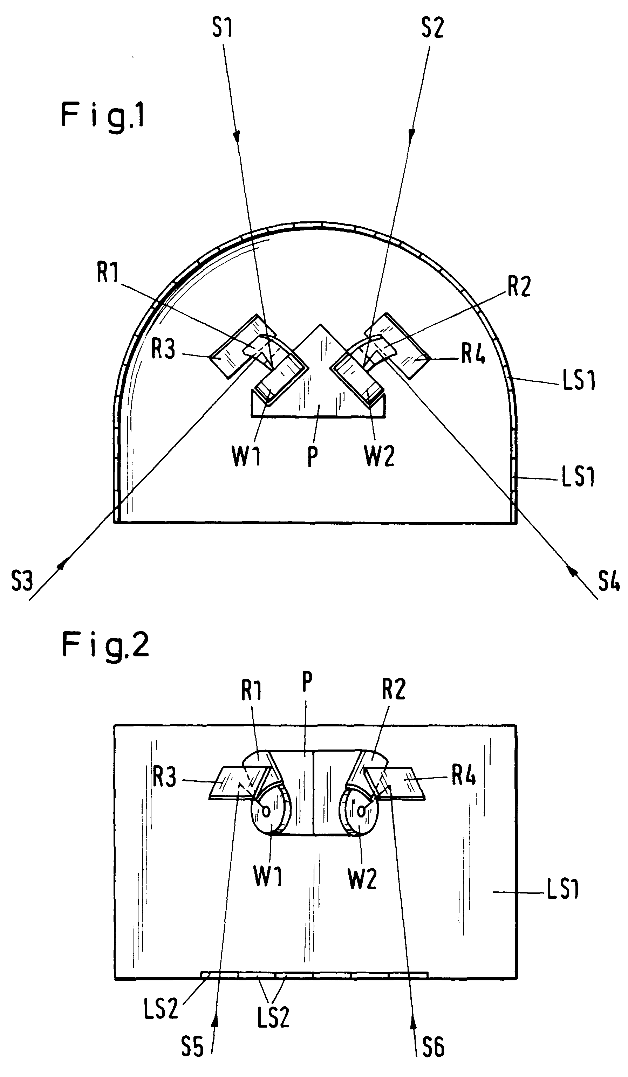

Wie die Figuren 1 und 2 erkennen lassen, besitzt der PIR-Bewegungsmelder einen linken Lichtsensor W1 und einen rechten Lichtsensor W2, die in einem Winkel von 90° zueinander versetzt angeordnet sind. Dem linken Lichtsensor W1 sind ein linker Horizontalreflektor R1 und ein linker Vertikalreflektor R3 und dem rechten Lichtsensor W2 sind ein rechter Horizontalreflektor R2 und ein rechter Vertikalreflektor R4 zugeordnet. Die genannten optischen Elemente sind auf einem Positionierer P so positioniert und befestigt, daß mit ihrer Hilfe jeweils ein bestimmter Erfassungswinkel abgedeckt wird.

Die beschriebene Anordnung wird von einer Vielzahl bogenförmig aneinander gereihter, vorzugsweise als Fresnellinsen gestalteter, einzelner Linsensegmente LS1 in einem Bogen von ca 270° umschlossen, wobei die Enden dieses Bogens beidseitig geradlinig auslaufen.

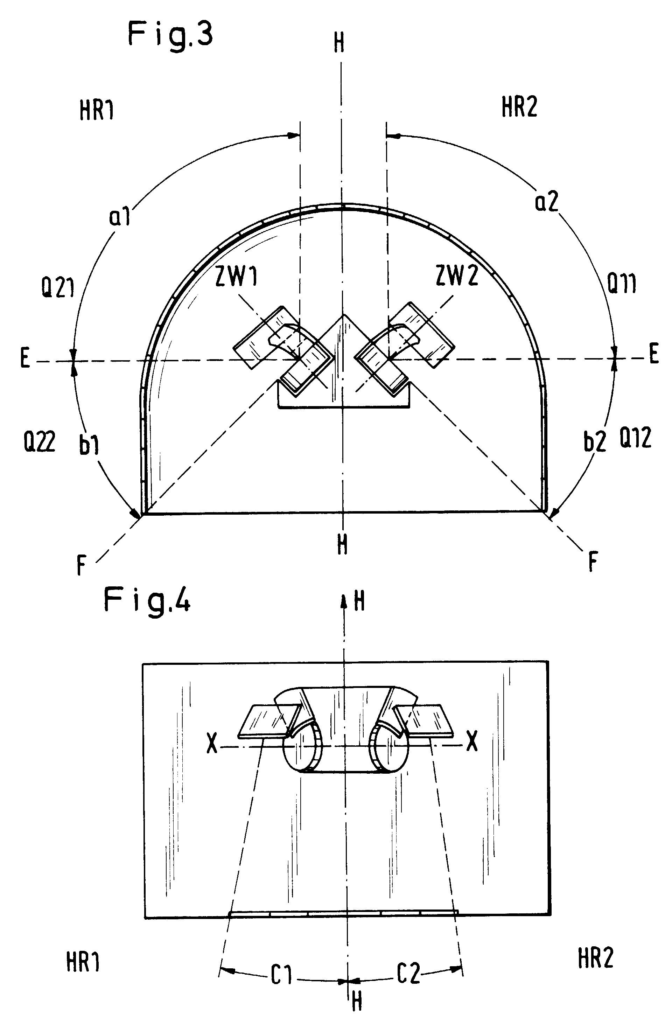

Wie auch aus den Figuren 2 und 3 ersichtlich, besitzt die Vorrichtung einen Aufbau, bei dem die optischen Elemente symmetrisch zu einer vertikalen Raumteilerebene H angeordnet sind. Dementsprechend ergeben sich auch symmetrische Erfassungsbereiche beidseitig der vertikalen Raumteilerebene H. Ausgehend von dem linken Lichtsensor W1 wird ein linker Sensor-Erfassungswinkel al von ca 90° erreicht, der in einem ersten linken Quadranten Q21 zwischen der vertikalen Raumteilerebene H und einer ersten Vertikalebene E liegt und in dem horizontal einfallende Lichtstrahlen erfaßt werden. Dieser Erfassungsbereich wird durch den linken Horizontalreflektor R1 um einen sich zu einer zweiten Vertikalebene F hin anschließenden linken Horizontalreflektor-Erfassungswinkel b1 erweitert.

Da auf der rechten Seite der vertikalen Raumteilerebene H im rechten Halbraum HR mit den Quadranten Q11,Q12 spiegelbildlich die gleichen Verhältnisse bestehen wie im linken Halbraum HR, bedarf es keiner Wiederholung der Erläuterung dieses grundsätzlichen Aufbaus.

Die im Bereich des linken Sensor-Erfassungswinkels al und des rechten Sensor-Erfassungswinkels a2 einfallenden direkten Horizontalstrahlen S1,S2 gelangen unreflektiert direkt auf die ihnen zugeordneten Lichtsensoren W1,W2. während die im Bereich des linken Horizontalreflektor-Erfassungswinkels bl und des rechten Horizontalreflektor-Erfassungswinkels b2 einfallenden reflektierten Horizontalstrahlen S3,S4 erst durch eine Umlenkung über die Horizontalreflektoren R1,R2 auf die ihnen zugeordneten Lichtsensoren W1,W2 gelangen. Die zunächst sehr flach einfallenden reflektierten Horizontalstrahlen S3,S4 fallen nach ihrer Umlenkung wesentlich steiler, also mit einem spitzen Winkel zur Sensorzentralachse ZW1,ZW2 des jeweiligen Lichtsensors W1,W2 ein.

Die Figuren 2 und 4 verdeutlichen, wie mit Hilfe eines linken Vertikalreflektors R3 und eines rechten Vertikalreflektors R4 zusätzlich zu den horizontalen Erfassungswinkeln auch Vertikalreflektor-Erfassungswinkel c1,c2 realisierbar sind. Der PIR-Bewegungsmelder ist hierzu in seinem Bodenbereich mit zweiten Linsensegmenten LS2 versehen, durch die von unten kommende reflektierte Vertikalstrahlen S5,S6 nach einer einfachen Umlenkung an den Vertikalreflektoren R3,R4 auf die zugehörigen Lichtsensoren W1,W2 gelangen.

Da es sich bei den Erfassungswinkeln um Raumwinkel handelt, deren Ausdehnung aber jeweils nur in einer Ebene darstellbar ist, gehört zu dem zweiten und dritten Vertikalreflektor-Erfassungswinkel c1,c2 noch ein vierter und fünfter sich in Richtung der vertikalen Raumteilerebene H erstreckender Erfassungswinkel d1,d2, der jedoch nicht dargestellt ist, weil dies selbstverständlich erscheint.

Wie aus den verschiedenen Figuren leicht ersichtlich ist, sind die einzelnen Reflektoren R1 bis R4 jeweils so angeordnet, daß auf sie fallende Lichtstrahlen S3 bis S6 nach ihrer Einfachreflexion in dem Halbraum HR1,HR2 bleiben, aus dem sie kommen.

## Patentansprüche

1. Vorrichtung zum Empfang von Lichtstrahlen, insbesondere PIR-Bewegungsmelder, mit einem Gehäuse, das mindestens ein Fenster besitzt, in dem erste, vorzugsweise als Fresnellinsen gestaltete Linsensegmente (LS1) so angeordnet sind, daß horizontal einfallende Lichtstrahlen als direkte Horizontalstrahlen (S1, S2) auf zwei Lichtsensoren (W1, W2) fokussiert werden, und die beiden Lichtsensoren (W1, W2) so zueinander angeordnet sind, daß der nutzbare Sensor-Erfassungswinkel (a1+a2) von beiden Lichtsensoren (W1, W2) zur Geltung kommt, dadurch gekennzeichnet, daß
a) im Bereich mindestens eines Lichtsensors (W1, W2) mindestens ein Horizontalreflektor (R1, R2) angeordnet ist,
b) die ersten Linsensegmente (LS1) die Lichtsensoren (W1, W2) und den mindestens einen Horizontalreflektor (R1, R2) bogenförmig so weit umschließen, daß sie auch zusätzliche Horizontalstrahlen fokussieren, die außerhalb des nutzbaren Sensor-Erfassungswinkels (a1 + a2) in zusätzlichen Winkelbereichen (b1, b2) einfallen, und
c) der mindestens eine Horizontalreflektor (R1, R2) so angeordnet ist, daß an ihm die zusätzlichen Horizontalstrahlen reflektiert werden und als reflektierte Horizontalstrahlen (33, 34) mindestens einen der Lichtsensoren (W1, W2) erreichen, wobei
d) die Vorrichtung symmetrisch zu einer vertikalen Raumteileebene (H) aufgebaut ist und sowohl einem linken Lichtsensor (W1) ein linker Horizontalreflektor (R1), als auch einem rechten Lichtsensor (W2) ein rechter Horizontalreflektor (R2) zugeordnet ist, und die linken und rechten Lichtsensoren (W1, W2) in einem Winkel von 90° zueinander versetzt angeordnet sind, und mit Hilfe der Horizontalreflektoren (R1, R2) sich an einen linken 90°-Sensor-Erfassungswinkel (a1) ein linker Horizontalreflektor-Erfassungswinkel (b1) von 45° und an einen rechten 90°-Sensor-Erfassungswinkel (a2) ein rechter Horizontalreflektor-Erfassungswinkel (b2) von 45° anschließt, so daß ein horizontaler Gesamterfassungswinkel (a1 + a2 + b1 + b2) = 270° erreicht wird.

2. Vorrichtung nach Anspruch 1, dadurch gekennzeichnet, daß die Linsensegmente (LS1, LS2) so ausgebildet sind, daß für die horizontalen Lichtstrahlen mehrere Bündelungshauptachsen entstehen und die Reflektion über bündelspezifische Reflektorsegmente der Horizontalreflektoren (R1, R2) erfolgt.

3. Vorrichtung nach Anspruch 2, dadurch gekennzeichnet, daß die einzelnen Reflektorsegmente plan oder näherungsweise plan sind.

4. Vorrichtung nach einem der vorhergehenden Ansprüche, dadurch gekennzeichnet, daß die Horizontalreflektoren (R1, R2) an einem Halter befestigt sind, der gleichzeitig auch als Positionierer (P) für die beiden Lichtsensoren (W1, W2) dient.

5. Vorrichtung nach einem der vorhergehenden Ansprüche, dadurch gekennzeichnet, daß der durch die Linsensegmente gebildete Bogen zu seinen beiden Enden hin geradlinig ausläuft und die im Bereich der Horizontalreflektor-Erfassungswinkel (b1, b2) liegenden Linsensegmente, die den gerade auslaufenden Teil bilden, mit ihrer Zentrumsachse auf den jeweils zugehörigen Lichtsensor (W1, W2) ausgerichtet sind.

6. Vorrichtung nach einem der vorhergehenden Ansprüche, dadurch gekennzeichnet, daß auf der Unterseite des Gehäuses ein weiteres Fenster vorgesehen ist, in dem vorzugsweise zweite Linsensegmente (LS2) angeordnet sind, und daß dem linken Lichtsensor (W1) ein linker Vertikalreflektor (R3) und dem rechten Lichtsensor (W2) ein rechter Vertikalreflektor (R4) derart zugeordnet ist, daß von unten innerhalb eines ersten Vertikalreflektor-Erfassungswinkels (c1) und innerhalb eines zweiten Vertikalreflektor-Erfassungswinkels (c2) einfallende Lichtstrahlen auf die beiden Lichtsensoren (W1, W2) reflektiert werden.

## Claims

1. Device for receiving light beams, especially PIR movement detector, having a housing which has at least one window in which first lens segments (LS1), preferably configured as Fresnel lenses, are arranged in such a way that horizontally incident light beams (S1, S2) are focused as direct horizontal beams onto two light sensors (W1, W2) and the two light sensors (W1, W2) are mutually arranged in such a way that the usable sensor detection angle (a1+a2) of both light sensors (W1, W2) is valid, characterized in that
a) at least one horizontal reflector (R1, R2) is arranged in the region of at least one light sensor (W1, W2),
b) the first lens segments (LS1) surround the light sensors (W1, W2) and the at least one horizontal reflector (R1, R2) in a curve shape to such an extent that they also focus additional horizontal beams which are incident outside the usable sensor detection angle (a1+a2) in addition angular regions (b1, b2), and
c) the at least one horizontal reflector (R1, R2) is arranged so that the additional horizontal beams are reflected at it and reach at least one of the light sensors (W1, W2) as reflected horizontal beams (33, 34),
d) the device being constructed symmetrically to a vertical space-dividing plane (H) and both a left horizontal reflector (R1) being assigned to a left light sensor (W1) and a right horizontal reflector (R2) being assigned to a right light sensor (W2), and the left and right sensors (W1, W2) being arranged offset at an angle of 90° from one another, and, with the aid of the horizontal reflectors (R1, R2), a left horizontal reflector detection angle (b1) of 45° being joined onto a left 90° sensor detection angle (a1) and a right horizontal reflector detection angle (b2) of 45° being joined onto a right 90° sensor detection angle (a2), with the result that a horizontal total detection angle of (a1+a2+b1+b2) = 270° is reached.

2. Device according to Claim 1, characterized in that the lens segments (LS1, LS2) are designed in such a way that a plurality of principal focusing axes are produced for the horizontal light beams and the reflection is carried out via focus-specific reflector segments of the horizontal reflectors (R1, R2).

3. Device according to Claim 2, characterized in that the individual reflector segments are flat or approximately flat.

4. Device according to one of the preceding claims, characterized in that the horizontal reflectors (R1, R2) are fixed on a holder which serves simultaneously also as a positioner (P) for the two light sensors (W1, W2).

5. Device according to one of the preceding claims, characterized in that the curve formed by the lens segments runs out to its two ends in a straight line and the lens segments lying in the region of the horizontal reflector detection angles (bl, b2), which segments form the part running straight out, are aligned with their central axis on the respective associated light sensor (W1, W2).

6. Device according to one of the preceding claims, characterized in that, on the underside of the housing, a further window is provided, in which preferably two lens segments (LS2) are arranged, and in that a left vertical reflector (R3) is assigned to the left light sensor (W1) and a right vertical reflector (R4) is assigned to the right light sensor (W2) in such a way that incident light beams from below within a first vertical reflector detection angle (c1) and within a second vertical reflector detection angle (c2) are reflected on to the two light sensors (W1, W2).

## Revendications

1. Dispositif pour recevoir des rayons lumineux, notamment détecteur de mouvement PIR, comportant un boîtier pourvu d'au moins une fenêtre dans laquelle des premiers segments de lentille (LS1), agencés de préférence sous la forme de lentilles de Fresnel, sont disposés de telle sorte que des rayons lumineux entrant horizontalement soient localisés en tant que rayons horizontaux (S1, S2) directs sur deux détecteurs de lumière (W1, W2) et les deux détecteurs de lumière (W1, W2) sont disposés l'un par rapport à l'autre de telle sorte que l'angle de détection (a1+a2) utile des deux détecteurs de lumière (W1, W2) soit exploité, caractérisé par le fait que
a) au moins un réflecteur horizontal (R1, R2) est disposé dans la région d'au moins un détecteur de lumière (W1, W2),
b) les premiers segments de lentille (LS1) entourent en arc de cercle les détecteurs de lumière (W1, W2) et le réflecteur horizontal (R1, R2) au nombre d'au moins un, de telle sorte qu'ils focalisent également des rayons horizontaux supplémentaires qui arrivent en dehors de l'angle de détection de détecteur (a1+a2) utile, dans des zones angulaires (b1, b2) supplémentaires et
c) le réflecteur horizontal (R1, R2) au nombre d'au moins un est disposé de telle sorte que les rayons horizontaux supplémentaires soient réfléchis sur lui et arrivent en tant que rayons horizontaux (33, 34) réfléchis sur au moins un des détecteurs de lumière (W1, W2),
d) le dispositif étant construit symétriquement par rapport à un plan verticale (H), un réflecteur horizontal (R1) gauche et un réflecteur horizontal (R2) droit étant associés respectivement à un détecteur de lumière (W1) gauche et un détecteur de lumière (W2) droit, les détecteurs de lumière (W1, W2) gauche et droit étant mutuellement décalés de 90°, à l'aide des réflecteurs horizontaux (R1, R2) un angle de détection de réflecteur horizontal (bl) gauche de 45° s'ajoutant à l'angle de détection de détecteur (a1) gauche de 90° et un angle de détection de réflecteur horizontal (b2) droit de 45° s'ajoutant à l'angle de détection de détecteur (a2) droit de 90°, de sorte que l'on obtient un angle de détection total horizontal (a1+a2+b1+b2) = 270°.

2. Dispositif selon la revendication 1, caractérisé par le fait que les segments de lentilles (LS1, LS2) sont agencés de telle sorte que l'on obtient pour les rayons lumineux horizontaux, plusieurs axes de focalisation principaux et que la réflexion a lieu par des segments de réflecteur spécifiques des réflecteurs horizontaux (R1, R2).

3. Dispositif selon la revendication 2, caractérisé par le fait que les différents segments de réflecteur sont plans ou sensiblement plans.

4. Dispositif selon une des revendications précédentes, caractérisé par le fait que les réflecteurs horizontaux (R1, R2) sont fixés à un support qui sert simultanément de moyen de positionnement (P) pour les deux détecteurs de lumière (W1, W2).

5. Dispositif selon une des revendications précédentes, caractérisé par le fait que l'arc formé par les segments de lentilles, à chacune de ses deux extrémités se termine par un tronçon rectiligne et que les segments de lentilles qui sont situés dans la zone de l'angle de détection de réflecteur (b1, b2) et forment les tronçons rectilignes sont orientés avec leur axe médian sur le détecteur de lumière (W1, W2) concerné.

6. Dispositif selon une des revendications précédentes, caractérisé par le fait qu'il est prévu, sur la face inférieure du boîtier, une fenêtre supplémentaire dans laquelle, de préférence, des deuxièmes segments de lentille (LS2) sont disposés et par le fait qu'un réflecteur vertical (R3) gauche et un réflecteur vertical (R4) droit sont associés respectivement au détecteur de lumière (W1) gauche et au détecteur de lumière (W2) droit, de telle sorte que des rayons lumineux qui arrivent par le bas, à l'intérieur d'un premier angle de détection de réflecteur vertical (c1) et d'un deuxième angle de détection de réflecteur vertical (c2), soient réfléchis sur les deux détecteurs de lumière (W1, W2).
